# EUROPEAN PATENT SPECIFICATION

(11) **EP 3 027 352 B1**
(45) Date of publication and mention of the grant of the patent: **04.09.2019**
(21) Application number: 14742677.9
(22) Date of filing: 01.07.2014
(51) Int. Cl.: B23K 37/02, B23K 37/053, B23K 31/02, H05B 6/10

(54) **SYSTEM FOR, AND METHOD OF HEATING AN INSIDE WALL OF A PIPE OR A VESSEL WITH A HEATING MEANS AND A MOVABLE MECHANICAL DEVICE**
SYSTEM, UND VERFAHREN ZUM ERWÄRMEN DER INNENWAND EINER ROHRLEITUNG ODER EINES BEHÄLTERS MIT EINEM ERWÄRMUNGSMITTEL UND EINER BEWEGLICHEN MECHANISCHEN VORRICHTUNG
SYSTÈME, ET PROCÉDÉS POUR CHAUFFER UNE PAROI INTÉRIEURE D'UN TUYAU OU D'UN RÉCIPIENT AU MOYEN D'UN ORGANE DE CHAUFFAGE ET D'UN DISPOSITIF MÉCANIQUE MOBILE

(30) Priority: 01.08.2013 US 201313956882
(43) Date of publication of application: 08.06.2016
(73) Proprietor: Illinois Tool Works Inc., Glenview, IL 60025 (US)
(72) Inventor: SHERRILL, Alan Dale, Glenview, Illinois 60025 (US); BYRNE, James Andrew, Glenview, Illinois 60025 (US)
(74) Representative: Trinks, Ole
(86) International application number: PCT/US2014/045167
(87) International publication number: WO 2015/017072

(56) References cited:
- EP-A1- 0 112 752
- GB-A- 2 475 574
- JP-A- H06 281 057
- JP-A- H08 276 214
- JP-A- 2009 220 179
- US-A- 6 119 916
- US-A1- 2013 092 665

## Description

### BACKGROUND

The invention relates generally to a system for and a method of heating an inside wall of a pipe or a vessel according to the preamble of claims 1 and 12 (see, for example, EP 0 112 752 A1).

Welding is a process that has increasingly become utilized in various industries and applications. Such processes may be automated in certain contexts, although a large number of applications continue to exist for manual welding operations. In both cases, such welding operations rely on a variety of types of equipment to ensure the supply of welding consumables (e.g., wire feed, shielding gas, etc.) is provided to the weld in appropriate amounts at the desired time.

In certain applications, a workpiece may be preheated, thereby removing hydrogen from the workpiece, facilitating a flow of filler material, and improving welding penetration, such as when a material of the workpiece has a high thermal conductivity (e.g., materials such as aluminum, steel, etc.). For example, when welding on a pipe, a heating device may be positioned on the outside of the pipe to preheat the pipe. After being preheated, welding may be performed on the pipe. Unfortunately, the heating device may physically interfere with the welding process, thereby making it more difficult to produce a high quality, continuous, and/or consistent weld. In another example, a workpiece may be preheated using a flame directed toward the portion of the workpiece to be preheated. Unfortunately, the flame may not uniformly heat the workpiece as desired, may induce hydrogen into the welded area, may be time consuming to facilitate, may be labor intensive, may consume fuel, and/or may alter the surface of the workpiece.

### BRIEF DESCRIPTION

A system for heating an inside wall of a pipe, or a vessel according to the present invention is defined in claim 1. The system includes a movable mechanical device configured to be positioned at least partially within the pipe, or the vessel. The movable mechanical device is configured to be moved using control circuitry. The system also includes a heating device coupled to the movable mechanical device and configured to be positioned at least partially within the pipe, the vessel, or some combination thereof. The heating device is also configured to heat the inside wall of the pipe, or the vessel.

A method of heating an inside wall of a pipe, or a vessel according to the present invention is defined in claim 12. The method includes disposing a heating device within the pipe, or the vessel. The heating device is mechanically movable using control circuitry. The method also includes energizing the heating device to heat the inside wall of the pipe, or the vessel.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a heating system having a power supply and a heating device, in accordance with aspects of the present disclosure;
FIG. 2 is a perspective view of an embodiment of a workpiece having a joint to be welded, in accordance with aspects of the present disclosure;
FIG. 3 is a block diagram of an embodiment of a movable mechanical device integrated with a heating system to facilitate heating of an inside wall of a workpiece, in accordance with aspects of the present disclosure; and
FIG. 4 is a flow chart of an embodiment of a method of heating an inside wall of a workpiece, in accordance with aspects of the present disclosure.

### DETAILED DESCRIPTION

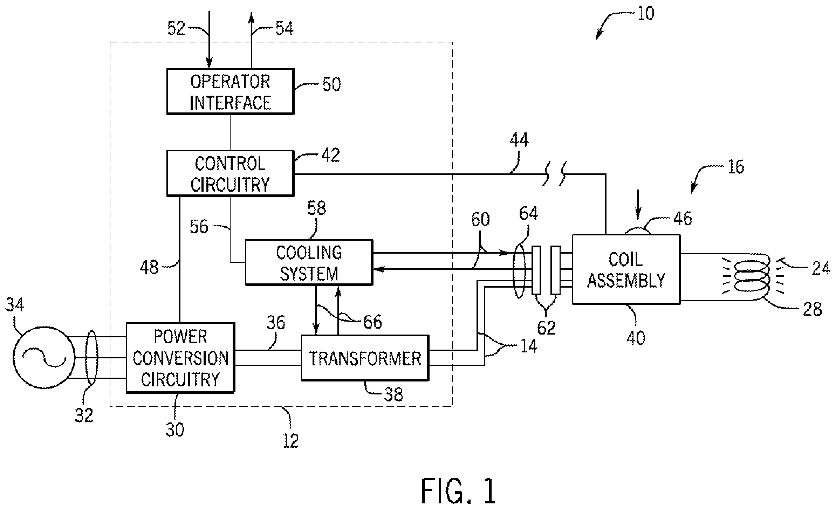

Turning now to the drawings, FIG. 1 illustrates an embodiment of a heating system 10 (e.g., induction heating system) having a power supply and a heating device. As illustrated, the heating system 10 includes a power supply 12 that provides (e.g., supplies) a power output 14 to a heating device 16 (e.g., induction coil, indication heating head). The power output 14 may be a high frequency alternating current power output designed to produce a field.

Upon receiving the power output 14, the heating device 16 produces a field 24 (e.g., electromagnetic field) as the power output 14 flows through a coil element 28. The field 24 is used to heat a workpiece by induction heating. As will be appreciated by those skilled in the art, induction heating is a phenomenon that occurs when conductive materials are within a changing magnetic or electromagnetic field.

Embodiments of the power supply 12 may include power conversion circuitry 30 configured to receive a power input 32 (e.g., alternating current) from a power source 34. As illustrated, the power source 34 may supply an alternating current to the power supply 12 as single- or multi-phase input. Alternatively, the power source 34 may provide a direct current power input 32, and the power conversion circuitry 30 may include an inverter or any suitable power conversion circuitry to produce an alternating current. The power input 32 may have a first frequency (e.g., 60 Hz). The power conversion circuitry 30 may increase the frequency of the power input 32 to produce an alternating current output 36 of a second frequency (e.g., 20 kHz). For example, the power conversion circuitry 30 may increase the frequency of the power input 32 so that the alternating current output 36 is between approximately 5 kHz to 60 kHz, approximately 7 kHz to 50 kHz, or approximately 400 Hz to 50 kHz. The alternating current output 36 may have any suitable waveform, such as a sine wave, a square wave, a triangle wave, a sawtooth wave, and so forth.

A transformer 38 between the power conversion circuitry 30 and a coil assembly 40 transmits the power of the alternating current output 36 to the power output 14, and may change the voltage and the current transmitted to the coil element 28. The transformer 38 may also step up the voltage or the current and/or inversely step down the voltage or the current. For example, a 4:1 transformer may step down the voltage by a factor of 4 and increase the current by a factor of 4, while negligibly affecting the power transmitted. In certain embodiments, an impedance matching transformer may be configured to increase the efficiency of power transmitted to the power output 14 by reducing losses due to mismatched impedance of the power supply 12 relative to the coil assembly 40. The transformer 38 may be used to increase a magnitude of the current change within the coil assembly 40 due to the alternating current, and thus increase the magnetic field produced by the coil element 28 and, thereby, the heat produced by the heating device 16. The transformer 38 is also used to better match the impedance of the coil assembly 40 to the power supply 12. As may be appreciated, certain embodiments may not include the transformer 38.

Control circuitry 42 within the power supply 12 provides for control of the heating system 10. The control circuitry 42 is coupled to the coil assembly 40 via a control line 44. In some embodiments, the heating device 16 may be configured for hand-held operation. For example, the coil assembly 40 may include a handle and may be readily portable by an operator without the use of additional equipment. The coil assembly 40 may have a trigger 46, switch, button, or other input device configured to transmit a signal via the control line 44 to the control circuitry 42. The control circuitry 42 controls the activation of heating device 16 through the control line 44 and/or through the control line 48 coupling the power conversion circuitry 30 to the control circuitry 42. For example, actuation of the trigger 46 initiates production of the field 24 by controlling the current in the power supply 12 or heating device 16. In some embodiments, the control circuitry 42 directs power output through the heating device 16 to produce the field 24 while the trigger 46 is actuated. In other embodiments, the trigger 46 actuates a momentary contact switch, and the field 24 is produced for a predetermined time after actuation of the trigger. For example, trigger 46 actuation may produce the field 24 for approximately up to 1, 2, 3, 4, 5, 10, or 15 seconds. Thus, the heating device 16 may be used for heating a workpiece. For example, the heating device 16 may raise the temperature of the workpiece by 25, 50, 100, 150, 200, 250, 300, 400, 500 degrees Celsius or more. In certain embodiments, the power supply 12 may include temperature detecting devices configured to detect one or more temperatures. The temperature detecting devices may provide temperature indications to the control circuitry 42. Moreover, the temperature indications may be used to control the temperature of the heating device 16. Accordingly, the control circuitry 42 may be configured to adjust an output provided to the heating device 16 based at least partly on a detected temperature.

The control circuitry 42 may be powered at least in part by the power conversion circuitry 30. The control circuitry 42 adjusts the frequency, current, voltage, power, duration, and other operating parameters of the alternating current output 36 produced by the power conversion circuitry 30. An operator interface 50 of the power supply 12 enables operator input 52 for adjusting the settings of the power conversion circuitry 30. For example, the operator interface 50 may be configured to permit the operator input 52 of at least one heating parameter. The operator interface 50 may have a plurality of controls (e.g., knobs, dials, buttons, switches, and sliders) to receive operator input 52. In addition, the operator interface 50 produces outputs 54 to alert the operator to the condition and state of the power supply 12 and the heating device 16. For example, the operator interface 50 includes a display to indicate the power, current, and/or voltage of the power input 32, the alternating current output 36, or the power output 14. The operator interface 50 may also indicate a duration of a produced field, the temperature of the heating device 16, whether the coil assembly 40 is coupled to the power supply 12, and/or whether a cooling system 58 is operational, among other properties pertaining to the status and operation of the power supply 12 and the heating device 16. The operator interface 50 may be on the power supply 12 or remotely coupled to the power supply 12. For example, the operator interface 50 may be a remote device coupled to the power supply 12 by a wired or wireless connection.

The power supply 12 may have the cooling system 58 to regulate operation of the transformer 38 and/or the heating device 16. For example, the cooling system 58 cools the heating device 16 to provide for sustained production of a field 24 and/or a high current through the coil element 28. The control circuitry 42 controls the cooling system 58 via the control line 56. The cooling system 58 directs a cooling fluid (e.g., air, water, etc.) to the heating device 16 through a first cooling conduit 60. During production of the field 24, the heating device 16 may become warm due to the current passing through the coil element 28 and/or due to radiation from the induction heated workpiece. The first cooling conduit 60 may be removably coupled to the coil assembly 40 and induction coil by a coupling 62. The power output 14 and first cooling conduit 60 together may be part of an input conduit 64 that may be removably coupled by the coupling 62 to the coil assembly 40. For example, the input conduit 64 includes a water cooled conductive wire (e.g., Litz wire) to transmit the power output 14 to the heating device 16. As may be appreciated, in certain embodiments, the power supply 12 may not include a cooling system 58 and/or may be cooled by air flow over the components of the power supply 12.

The control line 44 may also be a part of the input conduit 64 removably coupled to the coil assembly 40. Alternatively, the power output 14, control line 44, and first cooling conduit 60 may be separately coupled to the heating device 16 and coil assembly 40. The cooling system 58 may also direct a cooling fluid to the transformer 38 through a second cooling conduit 66. The cooling fluid controlled by the cooling system 58 may include air, water, refrigerant (e.g., ammonia, R-134a, R-410a), and so forth. The cooling system 58 circulates the cooling fluid through the heating device 16 and transformer 38 as shown by the return arrows of the first and second fluid conduits 60 and 66. The cooling system 58 may cool both the heating device 16 and the transformer 38 through a common cooling loop that includes the first fluid conduit 60 and second fluid conduit 66. Alternatively, each may be cooled separately through the respective first and second cooling conduits 60, 66. The control circuitry 42 may control the heating system 10 so that the heating device 16 will not produce a field 24 unless the cooling system 58 is cooling the heating device 16 and/or the transformer 38.

The control circuitry 42 may enable the heating system 10 to be programmed. Through the operator interface 50, the operator may adjust the heating parameters of the power supply 12 to change the field 24 produced by the heating device 16. Heating parameters may include a current flowing through the coil element 28, a voltage across the coil element 28, a power used by the coil element 28, a frequency of the power output 14, a duration of the field 24, and a temperature of the workpiece. In some embodiments, the control circuitry 42 has a memory for storing computer readable instructions and a processor for processing the instructions. For example, using the operator inputs 52, an operator may input desired heating parameters. The heating parameters may be stored in memory. Upon actuation of the trigger 46 (e.g., manually, mechanically, automatically), the control circuitry 42 causes the heating device 16 to produce a field 24 of a predetermined frequency and intensity for a predetermined time to heat a workpiece.

By using the heating system 10, a welding operator preheats a joint to be welded. Furthermore and according to the present invention, at least a portion of the heating system 10 is positioned within a workpiece (e.g., a pipe, a vessel) to heat an inside wall of the workpiece, thereby not physically interfering with welding performed on an outside wall of the workpiece. Thus, a high quality, continuous, and/or consistent weld may be produced. Furthermore, the heating system 10 may uniformly heat the workpiece as desired, may be efficient, may be automatic (e.g., done with little or no human intervention), and/or may not alter the surface of the workpiece.

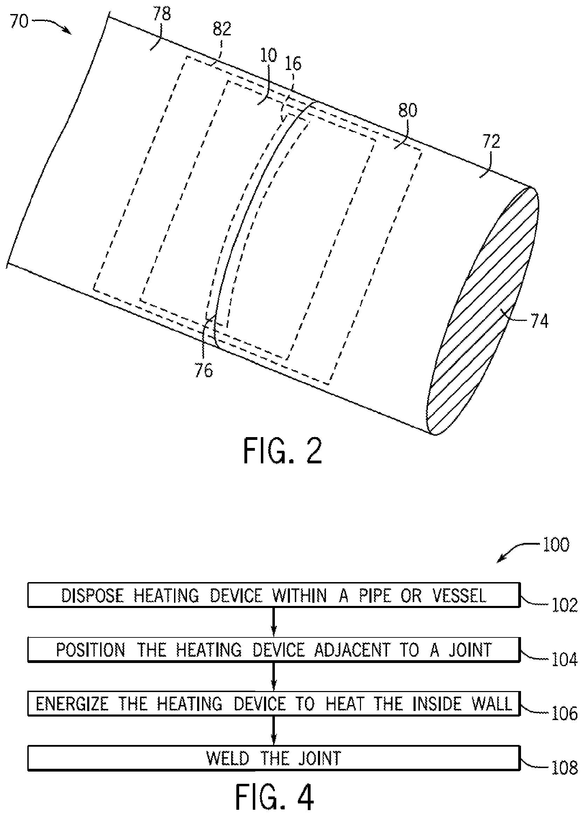

FIG. 2 is a perspective view of an embodiment of a workpiece 70 having a joint to be welded. The workpiece 70 is, according to the present invention, a pipe or a vessel. As used herein, "vessel" may refer to a ship, a boat, or any suitable hollow container having an inside wall and an outside wall. As illustrated, the workpiece 70 includes an outside wall 72 and an inside wall 74. Furthermore, the workpiece 70 includes a joint 76 between a first segment 78 and a second segment 80. In certain embodiments, the joint 76 may be welded to secure the first segment 78 to the second segment 80.

The heating system 10 is, according to the present invention, positioned at least partially within the workpiece 70 (e.g., manually, automatically) such that the heating device 16 provides heat to the inside wall 74 of the workpiece 70 to heat the joint 76 area (e.g., for preheating the joint 76 area prior to performing a weld along the joint 76). By position the heating system 10 at least partially inside the workpiece 70, welding along the joint 76, or at any other portion of the outside wall 72, may be performed on the outside of the workpiece 70 without the heating system 10 physically interfering with (e.g., blocking) the welding operation.

According to the present invention, the heating system 10 is coupled to and/or integrated with a movable mechanical device 82. Accordingly, the movable mechanical device 82 is used to position the heating device 16 within, or at least partially within, the workpiece 70. Furthermore, the movable mechanical device 82 may itself be positioned within, or at least partially within, the workpiece 70. Moreover, the movable mechanical device 82 may be used to position the heating device 16 adjacent to the joint 76 to enable heating of the joint 76. In certain embodiments, the movable mechanical device 82 may be configured to move within the workpiece 70 to position the heating device 16 adjacent to the joint 76. For example, the movable mechanical device 82 may manually, or automatically, move within the workpiece 70 to a suitable position. In some embodiments, the movable mechanical device 82 may include a pipeline pig (e.g., a mechanical device configured to move through pipe), an internal pipe clamp, a pneumatic internal pipe clamp, or any suitable mechanical device, such as a tractor riding on a track, a tractor with magnetic wheels, and so forth. Thus, the movable mechanical device 82 may simplify placing the heating device 16 adjacent to a portion of the workpiece 70 to be heated. Moreover, the heating device 16 is positioned adjacent to the inside wall 74 of the workpiece 70 so that there is no physical interference with welding performed on the outside wall 72 of the workpiece 70.

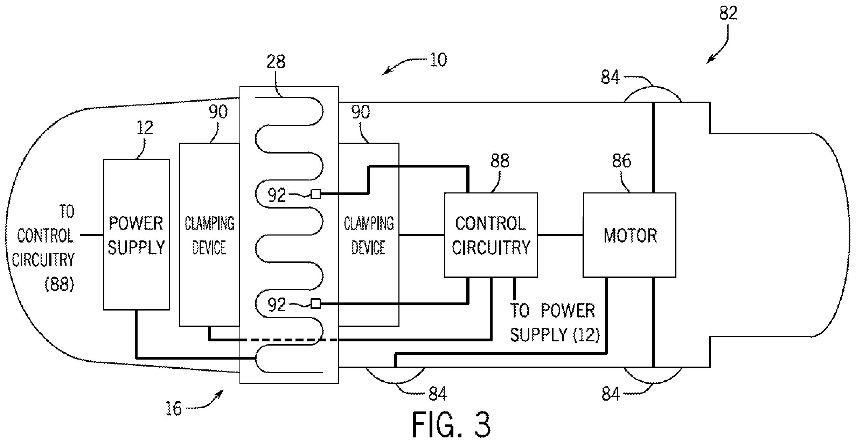

FIG. 3 is a block diagram of an embodiment of the movable mechanical device 82 integrated with the heating system 10 to facilitate heating of the inside wall 74 of the workpiece 70. According to the present invention, the movable mechanical device 82 includes multiple wheels 84 rotatable to move the movable mechanical device 82 within the workpiece 70, such as for moving the movable mechanical device 82 through a pipe or within a vessel. The movable mechanical device 82 also includes a motor 86 (e.g., or another driving device) configured to drive the wheels 84 to rotate (e.g., to move the movable mechanical device 82). Moreover, the movable mechanical device 82 includes control circuitry 88 configured to control motion, position, and/or operation of the movable mechanical device 82. Furthermore, the control circuitry 88 may be configured to control operation of one or more clamping devices 90 installed on the movable mechanical device 82. In certain embodiments, the control circuitry 88 may include electronic controls, hydraulic controls, pneumatic controls, and so forth. The clamping devices 90 are used to hold two materials adjacent to one another while a welding operation is being performed on the two materials, such as the first segment 78 and the second segment 80 of the workpiece 70. In certain embodiments, the control circuitry 88 may communicate with the control circuitry 42 of the power supply 12 to control the operation of the heating system 10. In other embodiments, the control circuitry 42 of the power supply 12 may control operation of the heating system 10 without interaction with the control circuitry 88. Moreover, in some embodiments, the control circuitry 42 of the power supply 12 may be configured to control operation of the movable mechanical device 82 in place of the control circuitry 88.

When heating is desired, the control circuitry 88 controls, according to the present invention, the heating system 10 to apply heat to the workpiece 70 using the coil element 28 of the heating device 16 and to control the heating device 16 based at least partly on a detected temperature. In certain embodiments, the heating device 16 of the heating system 10 may be configured to touch the inside wall 74 of the workpiece 70 to heat the workpiece 70 by conduction. For example, the movable mechanical device 82 may be a similar size to the workpiece 70 and the heating device 16 may be disposed on the movable mechanical device 82 to touch the inside wall 74. As another example, the movable mechanical device 82 may be smaller than the workpiece 70, and the heating device 16 may extend from the movable mechanical device 82 to touch, or be positioned adjacent to, the inside wall 74. As a further example, the movable mechanical device 82 may be smaller than the workpiece 70, and the movable mechanical device 82 may extend, such as via extensions from the wheels 84, to position the heating device 16 to touch, or be positioned adjacent to, the inside wall 74. Thus, the size of the movable mechanical device 82 may not directly correspond to the size of the workpiece 70.

According to the present invention, one or more temperature detecting devices 92 are positioned by the movable mechanical device 82 to detect a temperature provided by the heating system 10. The temperature detecting devices 92 may be any suitable temperature detecting device, such as a thermocouple, an infrared detector, a temperature sensor, and so forth. As may be appreciated, the temperature detecting devices 92 may be configured to detect a temperature of the heating device 16, the inside wall 74 of the workpiece 70, the outside wall 72 of the workpiece 70, and so forth. The control circuitry 88 monitors the temperature detected by the temperature detecting devices 92 and controls the heating system 10 to a desired temperature based on the detected temperature. Thus, the control circuitry 88 controls the heating system 10 to a desired temperature, thereby enabling the heating system 10 to be dynamically controlled.

FIG. 4 is a flow chart of an embodiment of a method 100 for heating an inside wall (e.g., inside wall 74) of a workpiece (e.g., workpiece 70, a pipe, a vessel). A heating device (e.g., heating device 16) is disposed within the workpiece (block 102). According to the present invention, the heating device is mechanically movable. The heating device is positioned adjacent to a joint (e.g., joint 76) to be welded (block 104). Moreover, the heating device is energized to heat the inside wall of the workpiece (block 106). In addition, the joint may be welded at an outside wall (e.g., outside wall 72) of the workpiece (block 108). In certain embodiments, a joint may be welded on an inside wall.

By using the heating system 10, a welding operator preheats a joint to be welded. Furthermore, the heating system 10 is positioned within a workpiece (e.g., a pipe, a vessel) to heat the inside wall of the workpiece, thereby not physically interfering with welding performed on the outside wall of the workpiece. Thus, a high quality, continuous, and/or consistent weld may be produced. Furthermore, the heating system 10 may uniformly heat the workpiece as desired, may be efficient, may be automatic (e.g., done with little or no human intervention), and/or may not alter the surface of the workpiece.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A system (10) for heating an inside wall (74) of a pipe (70), or a vessel, comprising:
control circuitry (88),
a movable mechanical device (82) configured to be positioned at least partially within the pipe (70), or the vessel,
wherein the movable mechanical device (82) is configured to be moved using the control circuitry (88); and
a heating device (16) coupled to the movable mechanical device (82) and configured to be positioned at least partially within the pipe (70), or the vessel, and to heat the inside wall (74) of the pipe (70), or the vessel,
wherein the movable mechanical device (82) includes multiple wheels (84) rotatable to move the movable mechanical device (82) through the pipe (70) or within the vessel,
**characterized in that**
the heating device (16) is an induction heating device (16) comprising an induction coil (28) located on the movable mechanical device (82) for preheating the inside wall of the pipe (70), or the vessel prior to a welding operation being performed on the outside wall (72) of the pipe (70), or the vessel, thereby not physically interfering with welding performed on the outside wall (72) of the pipe,
one or more temperature detecting devices (92) positioned by the movable mechanical device (82) to detect a temperature provided by the heating device (16),
the control circuitry (88) monitoring temperatures detected by the one or more temperature detecting devices (92) positioned by the movable mechanical device (82) and controlling the heating device (16) to a desired temperature based on the detected temperatures.

2. The system of claim 1, wherein the movable mechanical device (82) comprises a pipeline pig, or
wherein the movable mechanical device (82) comprises an internal pipe clamp.

3. The system of claim 2, wherein the internal pipe clamp comprises a pneumatic internal pipe clamp.

4. The system of one of the preceding claims, wherein the movable mechanical device (82) is configured to be manually adjusted using the control circuitry (88) to control a position of the movable mechanical device (82).

5. The system of one of the preceding claims, wherein the movable mechanical device (82) comprises a motor (86) configured to move the movable mechanical device (82).

6. The system of one of the preceding claims, wherein the induction heating device (16) comprises an induction heating head.

7. The system of one of the preceding claims, wherein the induction heating device (16) is configured to touch the inside wall (74) of the pipe (70), or the vessel.

8. The system of one of the preceding claims, wherein the induction heating device (16) is configured to heat the inside wall (74) of the pipe (70), or the vessel, by radiation from the induction heating device (16).

9. The system of one of the preceding claims, wherein the one or more temperature detection devices (92) are configured to detect a temperature of at least one of the induction heating device (16), the inside wall (74), and an outside wall (72) of the pipe (70), or the vessel.

10. The system of claim 9, wherein the one or more temperature detection devices (92) comprise a thermocouple, an infrared detector, or a combination thereof.

11. The system of claim 9 or 10, comprising a power supply configured to power the heating device (16), wherein the power supply (12) is configured to adjust an output provided to the heating device (16) based at least partly on the detected temperature.

12. A method of heating an inside wall (74) of a pipe (70), or a vessel, comprising:
disposing a movable mechanical device (82) with a heating device (16) coupled thereof within the pipe (70), or the vessel, wherein the heating device (16) is mechanically movable using control circuitry (88); and
energizing the heating device (16) to heat the inside wall (74) of the pipe (70), the vessel, or some combination thereof,
wherein the movable mechanical device (82) includes multiple wheels (84) rotatable to move the movable mechanical device (82) through the pipe (70) or within the vessel,
**characterized in that**
the heating device (16) is an induction heating device comprising an induction coil (28) located on the movable mechanical device (82) for preheating the inside wall (74) of the pipe (70), or the vessel prior to a welding operation being performed on the outside wall (72) of the pipe (70), or the vessel, thereby not physically interfering with welding performed on the outside wall (72) of the pipe,
the control circuitry (88) monitoring temperatures detected by one or more temperature detecting devices (92) positioned by the movable mechanical device (82) and controlling the heating device (16) to a desired temperature based on the detected temperatures.

13. The method of claim 12, comprising positioning the induction heating device (16) within the pipe (70), or the vessel, adjacent to a joint (76) to be welded.

## Patentansprüche

1. System (10) zum Erwärmen einer Innenwand (74) einer Rohrleitung (70) oder eines Behälters, das Folgendes umfasst:
Steuerschaltungsanordnung (88), eine bewegliche mechanische Vorrichtung (82), dazu ausgelegt, zumindest teilweise im Inneren der Rohrleitung (70) oder des Behälters positioniert zu werden,
wobei die bewegliche mechanische Vorrichtung (82) dazu ausgelegt ist, unter Verwendung der Steuerschaltungsanordnung (88) bewegt zu werden; und
eine Erwärmungsvorrichtung (16), gekoppelt mit der beweglichen mechanischen Vorrichtung (82) und dazu ausgelegt, zumindest teilweise im Inneren der Rohrleitung (70) oder des Behälters positioniert zu werden und die Innenwand (74) der Rohrleitung (70) oder des Behälters zu erwärmen,
wobei die bewegliche mechanische Vorrichtung (82) mehrere Räder (84) umfasst, die drehbar sind, um die bewegliche mechanische Vorrichtung (82) durch die Rohrleitung (70) oder innerhalb des Behälters zu bewegen,
**dadurch gekennzeichnet, dass**
die Erwärmungsvorrichtung (16) eine Induktionserwärmungsvorrichtung (16) ist, umfassend eine an der beweglichen mechanischen Vorrichtung (82) befindliche Induktionsspule (28) zum Vorerwärmen der Innenwand der Rohrleitung (70) oder des Behälters, bevor eine Schweißoperation an der Außenwand (72) der Rohrleitung (70) oder des Behälters durchgeführt wird, dabei nicht physisch mit dem an der Außenwand (72) der Rohrleitung durchgeführten Schweißen interferierend,
eine oder mehrere durch die bewegliche mechanische Vorrichtung (82) positionierte Temperaturdetektiervorrichtungen (92) zum Detektieren einer durch die Erwärmungsvorrichtung (16) bereitgestellten Temperatur, wobei die Steuerschaltungsanordnung (88) durch die eine oder mehreren Temperaturdetektiervorrichtungen (92), positioniert durch die bewegliche mechanische Vorrichtung (82), detektierte Temperaturen überwacht und die Erwärmungsvorrichtung (16) auf eine gewünschte Temperatur basierend auf den detektierten Temperaturen steuert.

2. System nach Anspruch 1, wobei die bewegliche mechanische Vorrichtung (82) einen Rohrleitungsmolch umfasst oder wobei die bewegliche mechanische Vorrichtung (82) eine interne Rohrleitungsklammer umfasst.

3. System nach Anspruch 2, wobei die interne Rohrleitungsklammer eine pneumatische interne Rohrleitungsklammer umfasst.

4. System nach einem der vorhergehenden Ansprüche, wobei die bewegliche mechanische Vorrichtung (82) dazu ausgelegt ist, manuell unter Verwendung der Steuerschaltungsanordnung (88) eingestellt zu werden, um eine Position der beweglichen mechanischen Vorrichtung (82) zu steuern.

5. System nach einem der vorhergehenden Ansprüche, wobei die bewegliche mechanische Vorrichtung (82) einen Motor (86) umfasst, der dazu ausgelegt ist, die bewegliche mechanische Vorrichtung (82) zu bewegen.

6. System nach einem der vorhergehenden Ansprüche, wobei die Induktionserwärmungsvorrichtung (16) einen Induktionserwärmungskopf umfasst.

7. System nach einem der vorhergehenden Ansprüche, wobei die Induktionserwärmungsvorrichtung (16) dazu ausgelegt ist, die Innenwand (74) der Rohrleitung (70) oder des Behälters zu berühren.

8. System nach einem der vorhergehenden Ansprüche, wobei die Induktionserwärmungsvorrichtung (16) dazu ausgelegt ist, die Innenwand (74) der Rohrleitung (70) oder des Behälters durch Strahlung von der Induktionserwärmungsvorrichtung (16) zu erwärmen.

9. System nach einem der vorhergehenden Ansprüche, wobei die eine oder mehreren Temperaturdetektionsvorrichtungen (92) dazu ausgelegt sind, eine Temperatur von zumindest einer aus der Induktionserwärmungsvorrichtung (16), der Innenwand (74) und einer Außenwand (72) der Rohrleitung (70) oder des Behälters zu detektieren.

10. System nach Anspruch 9, wobei die eine oder mehreren Temperaturdetektionsvorrichtungen (92) ein Thermoelement, einen Infrarotdetektor oder eine Kombination daraus umfassen.

11. System nach Anspruch 9 oder 10, umfassend eine Leistungsversorgung, dazu ausgelegt, die Erwärmungsvorrichtung (16) zu versorgen, wobei die Leistungsversorgung (12) dazu ausgelegt ist, einen für die Erwärmungsvorrichtung (16) bereitgestellten Ausgang zumindest teilweise basierend auf der detektierten Temperatur einzustellen.

12. Verfahren zum Erwärmen einer Innenwand (74) einer Rohrleitung (70) oder eines Behälters, das Folgendes umfasst:
Anordnen einer beweglichen mechanischen Vorrichtung (82) mit einer Erwärmungsvorrichtung (16), davon im Inneren der Rohrleitung (70) oder des Behälters gekoppelt, wobei die Erwärmungsvorrichtung (16) unter Verwendung der Steuerschaltungsanordnung (88) mechanisch beweglich ist; und
Aktivieren der Erwärmungsvorrichtung (16) zum Erwärmen der Innenwand (74) der Rohrleitung (70), des Behälters oder irgendeiner Kombination daraus,
wobei die bewegliche mechanische Vorrichtung (82) mehrere Räder (84) umfasst, die drehbar sind, um die bewegliche mechanische Vorrichtung (82) durch die Rohrleitung (70) oder innerhalb des Behälters zu bewegen,
**dadurch gekennzeichnet, dass**
die Erwärmungsvorrichtung (16) eine Induktionserwärmungsvorrichtung ist, umfassend eine an der beweglichen mechanischen Vorrichtung (82) befindliche Induktionsspule (28) zum Vorerwärmen der Innenwand (74) der Rohrleitung (70) oder des Behälters, bevor eine Schweißoperation an der Außenwand (72) der Rohrleitung (70) oder des Behälters durchgeführt wird, dabei nicht physisch mit dem an der Außenwand (72) der Rohrleitung durchgeführten Schweißen interferierend,
wobei die Steuerschaltungsanordnung (88) durch die eine oder mehreren Temperaturdetektiervorrichtungen (92), positioniert durch die bewegliche mechanische Vorrichtung (82), detektierte Temperaturen überwacht und die Erwärmungsvorrichtung (16) auf eine gewünschte Temperatur basierend auf den detektierten Temperaturen steuert.

13. Verfahren nach Anspruch 12, umfassend Positionieren der Induktionserwärmungsvorrichtung (16) im Inneren der Rohrleitung (70) oder des Behälters, angrenzend an eine zu schweißende Fügestelle (76).

## Revendications

1. Système (10) pour chauffer une paroi intérieure (74) d'un tuyau (70), ou d'un récipient, comprenant :
un ensemble de circuits de commande (88),
un dispositif mécanique mobile (82) conçu pour être positionné au moins partiellement à l'intérieur du tuyau (70), ou du récipient,
le dispositif mécanique mobile (82) étant conçu pour être déplacé au moyen de l'ensemble de circuits de commande (88) ; et
un dispositif de chauffage (16) accouplé au dispositif mécanique mobile (82) et conçu pour être positionné au moins partiellement à l'intérieur du tuyau (70), ou du récipient, et pour chauffer la paroi intérieure (74) du tuyau (70), ou du récipient,
le dispositif mécanique mobile (82) comprenant plusieurs roues (84) pouvant tourner pour déplacer le dispositif mécanique mobile (82) à travers le tuyau (70) ou à l'intérieur du récipient,
**caractérisé en ce que**
le dispositif de chauffage (16) est un dispositif de chauffage par induction (16) comprenant une bobine d'induction (28) située sur le dispositif mécanique mobile (82) pour préchauffer la paroi intérieure du tuyau (70), ou le récipient avant qu'une opération de soudage ne soit effectuée sur la paroi extérieure (72) du tuyau (70), ou du récipient, n'interférant ainsi pas physiquement avec la soudure effectuée sur la paroi extérieure (72) du tuyau, au moins un dispositif de détection de température (92) positionné par le dispositif mécanique mobile (82) pour détecter une température fournie par le dispositif de chauffage (16), l'ensemble de circuits de commande (88) surveillant les températures détectées par l'au moins un dispositif de détection de température (92) positionné par le dispositif mécanique mobile (82) et commandant le dispositif de chauffage (16) à une température souhaitée sur la base des températures détectées.

2. Système selon la revendication 1, le dispositif mécanique mobile (82) comprenant un racleur, ou
le dispositif mécanique mobile (82) comprenant un collier de serrage interne.

3. Système selon la revendication 2, le collier de serrage interne comprenant un collier de serrage interne pneumatique.

4. Système selon l'une des revendications précédentes, le dispositif mécanique mobile (82) étant conçu pour être ajusté manuellement au moyen de l'ensemble de circuits de commande (88) pour commander une position du dispositif mécanique mobile (82).

5. Système selon l'une des revendications précédentes, le dispositif mécanique mobile (82) comprenant un moteur (86) conçu pour déplacer le dispositif mécanique mobile (82) .

6. Système selon l'une des revendications précédentes, le dispositif de chauffage par induction (16) comprenant une tête de chauffage par induction.

7. Système selon l'une des revendications précédentes, le dispositif de chauffage par induction (16) étant conçu pour toucher la paroi intérieure (74) du tuyau (70) ou du récipient.

8. Système selon l'une des revendications précédentes, le dispositif de chauffage par induction (16) étant conçu pour chauffer la paroi intérieure (74) du tuyau (70), ou du récipient, par rayonnement provenant du dispositif de chauffage par induction (16).

9. Système selon l'une des revendications précédentes, l'au moins un dispositif de détection de température (92) étant conçu pour détecter une température d'au moins l'un du dispositif de chauffage par induction (16), de la paroi intérieure (74) et d'une paroi extérieure (72) du tuyau (70), ou du récipient.

10. Système selon la revendication 9, l'au moins un dispositif de détection de température (92) comprenant un thermocouple, un détecteur infrarouge, ou une combinaison de ceux-ci.

11. Système selon la revendication 9 ou 10, comprenant une alimentation électrique conçue pour alimenter le dispositif de chauffage (16), l'alimentation électrique (12) étant conçue pour ajuster une sortie fournie au dispositif de chauffage (16) sur la base au moins partiellement de la température détectée.

12. Procédé de chauffage d'une paroi intérieure (74) d'un tuyau (70), ou d'un récipient, comprenant les étapes consistant à :
disposer un dispositif mécanique mobile (82) avec un dispositif de chauffage (16) accouplé à celui-ci à l'intérieur du tuyau (70), ou du récipient,
le dispositif de chauffage (16) étant mobile mécaniquement au moyen d'un ensemble de circuits de commande (88) ; et
mettre sous tension le dispositif de chauffage (16) pour chauffer la paroi intérieure (74) du tuyau (70), du récipient, ou d'une combinaison de ceux-ci,
le dispositif mécanique mobile (82) comprenant plusieurs roues (84) pouvant tourner pour déplacer le dispositif mécanique mobile (82) à travers le tuyau (70) ou à l'intérieur du récipient,
**caractérisé en ce que**
le dispositif de chauffage (16) est un dispositif de chauffage par induction comprenant une bobine d'induction (28) située sur le dispositif mécanique mobile (82) pour préchauffer la paroi intérieure (74) du tuyau (70), ou du récipient avant une opération de soudure effectuée sur la paroi extérieure (72) du tuyau (70), ou du récipient, n'interférant ainsi physiquement pas avec la soudure effectuée sur la paroi extérieure (72) du tuyau,
l'ensemble de circuits de commande (88) surveillant des températures détectées par au moins un dispositif de détection de température (92) positionné par le dispositif mécanique mobile (82) et commandant le dispositif de chauffage (16) à une température souhaitée sur la base des températures détectées.

13. Procédé selon la revendication 12, comprenant l'étape consistant à positionner le dispositif de chauffage par induction (16) à l'intérieur du tuyau (70), ou du récipient, adjacent à un joint (76) à souder.
